# EUROPÄISCHE PATENTSCHRIFT

(11) **EP 0 773 156 B1**
(45) Veröffentlichungstag und Bekanntmachung des Hinweises auf die Patenterteilung: **18.09.2002**
(21) Anmeldenummer: 96117048.7
(22) Anmeldetag: 24.10.1996
(51) Int. Cl.: B62D 5/083

(54) **Servoventil**
Servovalve
Servovalve

(30) Priorität: 13.11.1995 DE 19542200
(43) Veröffentlichungstag der Anmeldung: 14.05.1997
(73) Patentinhaber: DaimlerChrysler AG, 70567 Stuttgart (DE)
(72) Erfinder: Langkamp, Bernd, 70329 Stuttgart (DE)

(56) Entgegenhaltungen:
- EP-B- 0 171 247
- WO-A-90/03295
- PATENT ABSTRACTS OF JAPAN vol. 012, no. 404 (M-757), 26.Oktober 1988 -& JP 63 145173 A (KAYABA IND CO LTD), 17.Juni 1988,

## Beschreibung

Die Erfindung betrifft ein Servoventil nach Art eines Drehschieberventiles mit Drehschieberteil und Drehschieberbuchse, mit einem Druckanschluß und einem Niederdruckanschluß sowie zwei Motoranschlüssen, welche mit dem Druckanschluß über erste Spalte zwischen Steuerkanten am Drehschieberteil und zugeordneten Steuerkanten an der Drehschieberbuchse und mit dem Niederdruckanschluß über weitere Spalte zwischen weiteren Steuerkanten am Drehschieberteil und zugeordneten weiteren Steuerkanten an der Drehschieberbuchse verbindbar sind, wobei bei Steuerhüben des Drehschieberteiles relativ zur Drehschieberbuchse jeweils die dem einen Motoranschluß zugeordneten Spalte entgegengesetzt zu den dem anderen Motoranschluß zugeordneten Spalten und der erste Spalt oder die ersten Spalte jedes Motoranschlusses entgegengesetzt zu dem zweiten Spalt oder den zweiten Spalten dieses Motoranschlusses verändert werden, und wobei entweder die Steuerkanten des Drehschieberteils oder der Drehschieberbuchse an einem axial verschiebbaren Schieberteil, oder die Steuerkanten des Drehschieberteils und der Drehschieberbuchse jeweils an einem axial verschiebbaren Schieberteil, angeordnet sind.

Servoventile sind allgemein bekannt und werden beispielsweise in Servolenkungen von Kraftfahrzeugen zur Steuerung des der Servolenkung zugeordneten hydraulischen Servomotors eingesetzt. Dabei ist der Servomotor regelmäßig als doppeltwirkendes Kolben-Zylinder-Organ ausgebildet, wobei jede Seite des Kolben-Zylinder-Organs mit jeweils einem der beiden Motoranschlüsse des Servoventils verbunden ist. Bei Steuerhüben des Schieberteiles relativ zum Gegenschieberteil tritt dann eine steuerbare Druckdifferenz zwischen den Motoranschlüssen auf, so daß das Kolben-Zylinder-Organ eine entsprechende Servokraft in der einen oder anderen Richtung zur Unterstützung des jeweiligen Lenkmanövers erzeugt.

Gemäß der DE 34 28 727 A1 können Servoventile von Servolenkungen als Drehschieberventile mit einem innerhalb einer Drehschieberbuchse drehbaren Schieberteil ausgebildet sein. Diese Teile sind innerhalb der Antriebsverbindung zwischen Lenkhandrad und Fahrzeuglenkrädern so angeordnet, daß sie sich in Abhängigkeit von den zwischen Lenkhandrad und Fahrzeugrädern übertragenen Kräften relativ zueinander in der einen oder anderen Richtung mehr oder weniger stark verdrehen, so daß der Servomotor eine von der Größe der übertragenen Kräfte abhängige Servokraft erzeugen kann, durch die die am Lenkhandrad spürbare bzw. aufzubringende Handkraft vermindert wird.

Es ist grundsätzlich erwünscht und bekannt, die Charakteristik einer Servolenkung in Abhängigkeit von vorzugebenden Parametern zu verändern. In diesem Zusammenhang ist aus der gattungsbildenden JP-A 63-145173 ein als Drehschieberventil ausgebildetes Servoventil bekannt, bei dem die die ersten und zweiten Spalte bildenden Steuerkanten des Drehschiebers sowie der Schieberbuchse parallel zueinander und schräg zur Umfangsrichtung von Drehschieber und Schieberbuchse angeordnet sind. Darüber hinaus sind Drehschieber und Schieberbuchse relativ zueinander sowohl drehbar als auch axial verschiebbar angeordnet. Auf diese Weise kann die zwischen den beiden Motoranschlüssen auftretende Druckdifferenz sowohl durch einen Drehhub als auch einen Axialhub verändert werden, wobei durch axiale Verstellung des Drehschiebers relativ zur Schieberbuchse die sogenannte hydraulische Mitte des Servoventiles, d.h. die Drehstellung für verschwindende Druckdifferenz zwischen den beiden Motoranschlüssen, verstellt wird.

Aus der DE 39 05 636 A1 ist ein als 3/2-Ventil ausgebildetes Schieberventil bekannt, bei dem innerhalb eines Gehäuses eine Ventilbohrung sowie davon in Querrichtung abzweigende Ventilanschlüsse vorgesehen sind, wobei der in Längsrichtung der Ventilbohrung mittlere Anschluß mit einem zu steuernden Hydraulikaggregat kommuniziert und die beiden anderen Anschlüsse zu einer Druckquelle bzw. zu einem relativ drucklosen Reservoir führen. Ein innerhalb der Ventilbohrung angeordneter, axial verschiebbarer Schieber ermöglicht es, durch entsprechende axiale Verschiebung den mittleren Anschluß gegenüber den beiden anderen Anschlüssen abzusperren oder mit jeweils einem der beiden anderen Anschlüsse zu verbinden, wobei die Verbindung je nach Lage des Schiebers einen mehr oder weniger großen Drosselwiderstand aufweist. Die Mündung des mittleren Anschlusses in die Ventilbohrung kann eine unrunde Form aufweisen, beispielsweise die Form eines Karos, dessen eine Diagonale parallel zur Achse der Ventilbohrung ausgerichtet ist. Wenn der Schieber aus seiner den mittleren Anschluß absperrenden Lage verschoben wird, wird dann zunächst eine Öffnung zum mittleren Anschluß mit dreiecksförmigem Querschnitt freigegeben, dessen Größe bei weiterer Verstellung des Schiebers anwächst.

Die EP 0 171 247 B1 zeigt ein als Drehschieberventil ausgebildetes Servoventil, bei dem die Drehschieberbuchse parameterabhängig axial relativ zum Drehschieberteil verschiebbar ist, um die bei Drehhüben des Servoventiles auftretende Steuercharakteristik des Servoventiles parameterabhängig verändern zu können.

Bei einem aus der WO 90/03295 bekannten Servoventil, welches ebenfalls als Drehschieberventil ausgebildete ist, können das Drehschieberteil und die Schieberbuchse bei der Herstellung des Ventiles relativ zueinander axial justiert werden, um die aufgrund von Fertigungstoleranzen streuende Steuerungscharakteristik des Ventiles bei Drehhüben einer gewünschten Steuerungscharakteristik anzunähern. Nach erfolgter Justage werden Drehschieberteil und Drehschieberbuchse relativ zueinander axial unbeweglich fixiert.

Aufgabe der Erfindung ist es nun, eine vorteilhafte Konstruktion für ein Servoventil mit parameterabhängig steuerbarer Charakteristik zu schaffen.

Diese Aufgabe wird erfindungsgemäß dadurch gelöst, daß bei dem Servoventil der eingangs angegebenen Art die Querschnitte aller Spalte durch die axiale Verschiebung des Schieberteiles bzw.der Schieberteile gleichgerichtet veränderbar sind.

Durch Einsatz unterschiedlicher Schieberteile kann das erfindungsgemäße Servoventil ohne nennenswerte konstruktive Abänderungen an sehr unterschiedliche Einsatzbedingungen angepaßt werden.

Im übrigen wird hinsichtlich bevorzugter Merkmale der Erfindung auf die Ansprüche sowie die nachfolgende Erläuterung verwiesen.

Dabei zeigt
- Fig. 1: einen Radialschnitt eines als Drehschieberventil ausgebildeten, grundsätzlich bekannten Servoventiles,
- Fig. 2: eine ausschnittsweise Seitenansicht von Schieberbuchse und Drehschieberteil entsprechend dem Pfeil II in Fig. 1,
- Fig. 3: eine der Fig. 2 entsprechende Ansicht einer erfindungsgemäßen Ausführungsform,
- Fig. 4: einen schematisierten Axialschnitt der Ausführungsform nach Fig. 3 und
- Fig. 5: verschiedene Diagramme, die das Steuerverhalten wiedergeben.

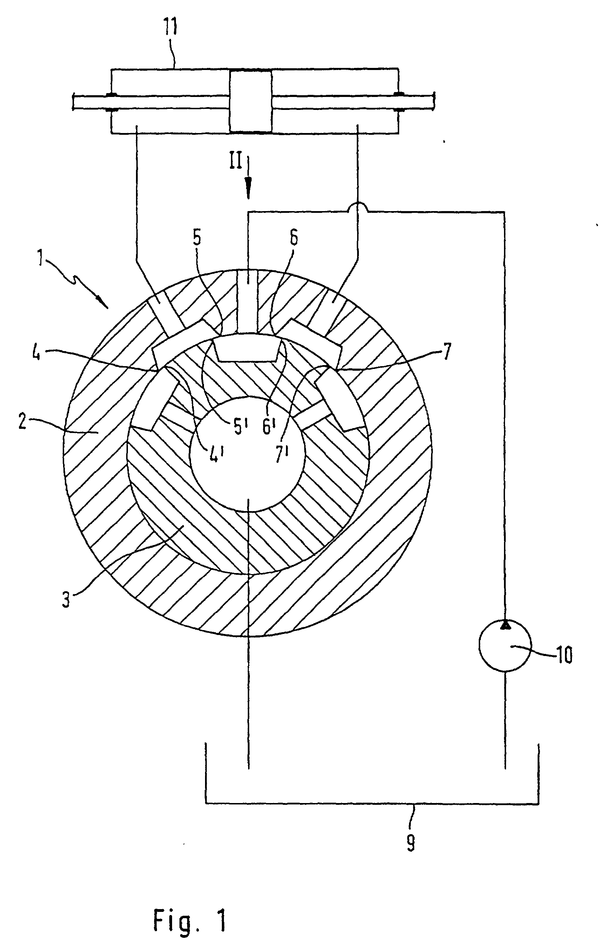

Gemäß Fig. 1 besitzt das als Drehschieberventil ausgebildete Servoventil 1 eine Schieberbuchse 2 sowie ein darin drehbar angeordnetes Drehschieberteil 3, dessen Außendurchmesser dem Innendurchmesser der Schieberbuchse 2 angepaßt ist.

In der Innenumfangswand der Schieberbuchse 2 sind zumindest zwei axiale Ausnehmungen mit Steuerkanten 4 bis 7 angeordnet. Das Drehschieberteil 3 besitzt auf einem Außenumfang zumindest drei ähnliche Ausnehmungen mit Steuerkanten 4' bis 7'. In der dargestellten Mittellage von Schieberbuchse 2 und Drehschieberteil 3 verbleiben zwischen den Steuerkanten 4 sowie 4', 5 sowie 5' usw. jeweils mehr oder weniger breite Spalte, so daß die von den Ausnehmungen der Schieberbuchse 2 sowie des Drehschieberteiles 3 gebildeten Kammern miteinander kommunizieren.

Gegebenenfalls kann die Anzahl der axialen Ausnehmungen auch ein Vielfaches von Zwei bzw. ein Vielfaches von Drei betragen. Die Anzahl muß lediglich so gewählt sein, daß bei Einleitung von Druckmedium Querkraftfreiheit besteht.

In den Raum zwischen den Steuerkanten 5 und 6 mündet die Druckleitung einer saugseitig mit einem relativ drucklosen Reservoir 9 verbundenen Servopumpe 10. Ein Servomotor 11, der als doppeltwirkendes Kolben-Zylinder-Aggregat ausgebildet ist, ist auf seiner einen Seite mit dem Raum zwischen den Steuerkanten 4 und 5 und auf seiner anderen Seite mit dem Raum zwischen den Steuerkanten 6 und 7 verbunden. Die außerhalb der Steuerkanten 4 und 7 liegenden Räume kommunizieren mit dem Reservoir 9.
In der dargestellten Mittellage von Schieberbuchse 2 und Drehschieberteil 3 relativ zueinander liegt zwischen den beiden Seiten des Servomotors 7 Druckgleichheit vor, weil die Steuerspalte zwischen den Kanten 5 und 5' sowie 6 und 6' einerseits und die Spalte zwischen den Steuerkanten 4 und 4' sowie 7 und 7' andererseits jeweils gleiche Querschnitte haben, so daß von der Druckseite der Servopumpe 10 zwei in gleicher Weise gedrosselte Strömungswege - einerseits durch die Spalte zwischen den Steuerkanten 5 sowie 5' und 4 sowie 4' und andererseits über die Spalte zwischen den Steuerkanten 6 sowie 6' und 7 sowie 7' - vorliegen. Wenn dagegen die Schieberbuchse 2 und das Drehschieberteil 3 relativ zueinander verdreht werden, bilden sich zwei zueinander unsymmetrische Strömungswege. Wenn beispielsweise das Drehschieberteil 3 gegen den Uhrzeigersinn relativ zur Schieberbuchse 2 verdreht wird, verbreitert sich der Schlitz zwischen den Steuerkanten 5 und 5', während sich der Schlitz zwischen den Steuerkanten 6 und 6' verengt. Gleichzeitig verengt sich der Schlitz zwischen den Steuerkanten 4 und 4', während sich der Schlitz zwischen den Steuerkanten 7 und 7' erweitert. Dies führt dazu, daß der Druck auf der linken Seite des Servomotors 11 relativ zum Druck auf dessen rechter Seite ansteigt, d.h. der Kolben des Servomotors 11 sucht sich nach rechts zu verschieben.

Die Druckdifferenz zwischen den beiden Seiten des Servomotors 11 ist vom Maß sowie der Richtung des Drehhubes zwischen der Schieberbuchse 2 und dem Drehschieberteil 3 abhängig, wobei die Progressivität zwischen der Veränderung der Druckdifferenz und dem jeweiligen Drehhub vom Querschnitt sowie insbesondere von der Breite der Schlitze zwischen den Steuerkanten 4 und 8' in der Mittellage von Drehschieberbuchse 2 und Drehschieberteil 3 abhängt.

Diese Progressivität kann nun wie folgt verändert werden.

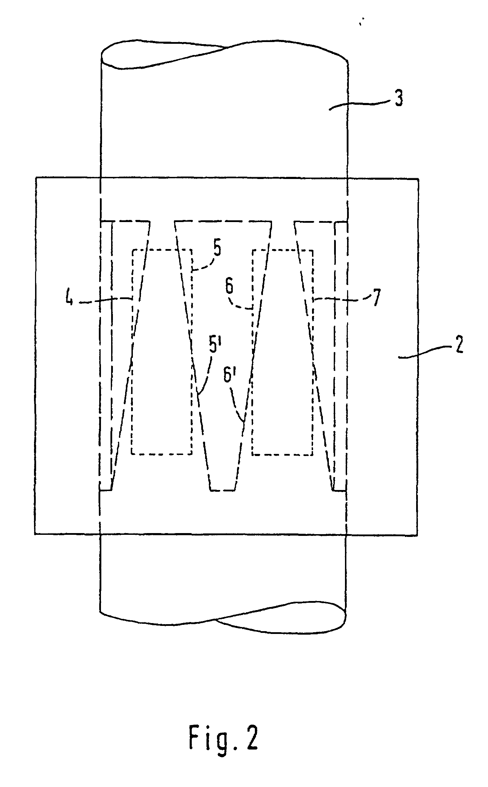

Gemäß Fig. 2 sind die Steuerkanten 5 und 6 der Schieberbuchse 2 parallel zu deren Längsachse ausgerichtet, während die Steuerkanten 5' und 6' des Drehschieberteiles 3 schräg zu dieser Längsachse und zueinander V-förmig ausgerichtet sind. Durch Axialverstellbarkeit des Drehschieberteiles 3 relativ zur Schieberbuchse 2 läßt sich somit die mittlere Breite der Steuerspalte zwischen den Kanten 5 und 5' bzw. 6 und 6' vergrößern und verkleinern. Entsprechendes gilt für die Steuerspalte zwischen den Steuerkanten 4 und 4' bzw. 7 und 7'.

Abweichend von der in Fig. 2 dargestellten Ausführungsform können die Steuerkanten 5 und 6 der Drehschieberbuchse 3 gegebenenfalls in gleicher Weise wie die Steuerkanten 5' und 6' des Drehschieberteiles 3 V-förmig angeordnet sein. Auch in diesem Falle lassen sich dann die Steuerschlitze durch Axialverschiebung der Drehschieberbuchse 2 relativ zum Drehschieberteil 3 verengen bzw. erweitern.

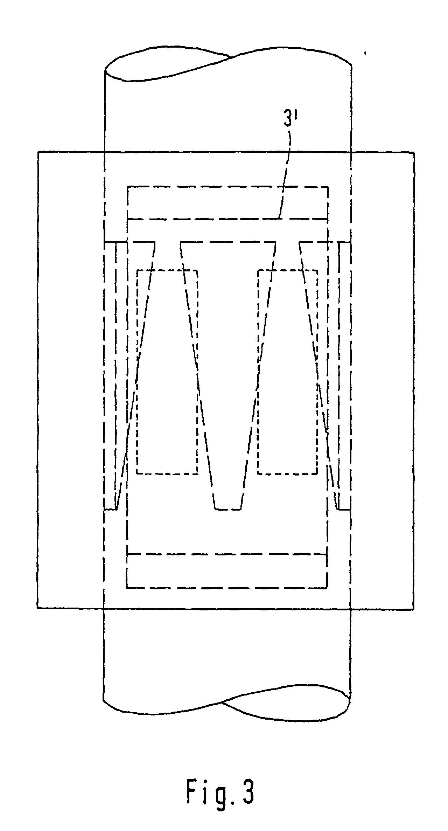

Gemäß Fig. 3 braucht nicht das gesamte Drehschieberteil 3 relativ zur Schieberbuchse 2 axial verschiebbar zu sein. Vielmehr besteht erfindungsgemäß die Möglichkeit, am Drehschieberteil 3 axial verschiebbare Schieberstücke 3' vorzusehen, an denen die Steuerkanten - hier 5' und 6' - angeordnet sind.

In grundsätzlich gleicher Weise können auch an der Schieberbuchse 2 bewegliche Schieberstücke vorhanden sein.

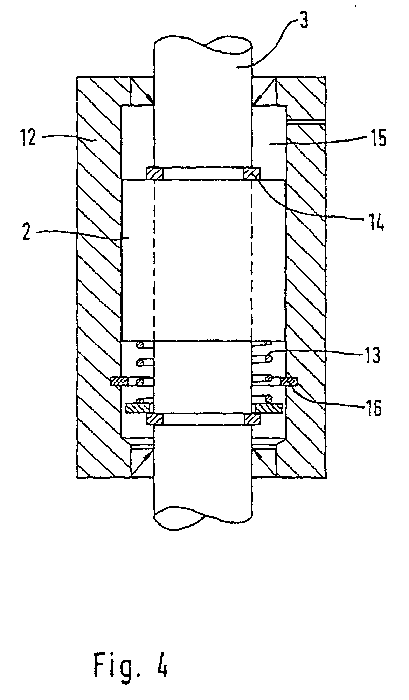

Bei der in Fig. 4 dargestellten Ausführungsform ist die auf dem Drehschieberteil 3 axial bewegliche Schieberbuchse 2 innerhalb eines Gehäuses 12 nach Art eines Ringkolbens angeordnet, welcher mittels einer Feder 13 gegen einen ersten Anschlagring 14 und durch steuerbaren Hydraulikdruck in einer Ringkammer 15 gegen die Kraft der vorgenannten Feder 13 gegen einen zweiten Anschlagring 16 gedrängt wird. Je nach Größe des hydraulischen Druckes in der Ringkammer 15 nimmt die Schieberbuchse 2 eine Zwischenstellung zwischen den Anschlagringen 14 und 16 ein.

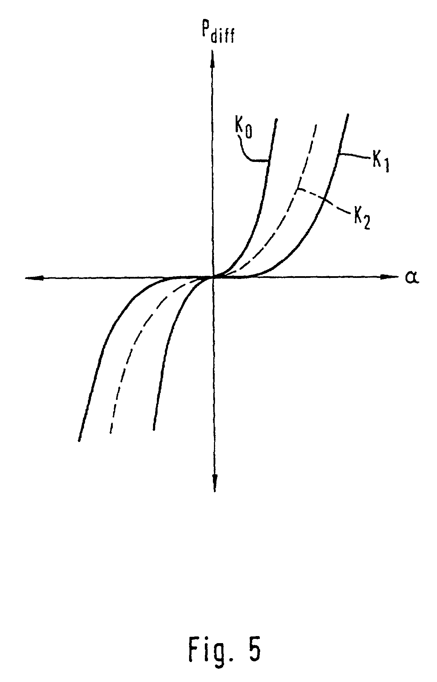

Fig. 5 zeigt Diagramme, die den Differenzdruck P_{diff} zwischen den beiden Seiten des Servomotors 11 in Abhängigkeit vom relativen Drehwinkel α zwischen Schieberbuchse und Drehschieberteil 3 wiedergeben, und zwar bei unterschiedlichen Axiallagen der miteinander zusammenwirkenden Steuerkanten. Wenn das Drehschieberteil 3 relativ zur Schieberbuchse 2 gegenüber der Mittelstellung zur einen Richtung verdreht wird, ergibt sich eine mit zunehmenden Drehwinkel ansteigende Druckdifferenz in der einen Richtung; bei Relativdrehung in der anderen Richtung stellt sich eine entsprechende Druckdifferenz in umgekehrter Richtung ein. Die Kurve K₀ zeigt die Verhältnisse, die sich einstellen, wenn die Steuerspalte zwischen den miteinander zusammenwirkenden Steuerkanten in Mittelstellung von Schieberbuchse und Drehschieberteil 3 vergleichsweise schmal sind. Die Kurve K₁ zeigt die entsprechenden Verhältnisse, wenn die genannten Steuerspalte eine große Breite haben. Die Kurve K₂ zeigt die Verhältnisse bei mittelbreiten Steuerspalten.

Wenn nun wie bei bisherigen Servolenkungen der relative Drehwinkel zwischen Schieberbuchse 2 und Drehschieberteil 3 von den zwischen Lenkhandrad und Fahrzeuglenkrädern übertragenenen Kräften abhängt, setzt im Falle der Kurve K₀ die Servounterstützung des Servomotors 11 vergleichsweise früh ein, während im Falle der Kurven K₁ bzw. K₂ die Servounterstützung sehr spät bzw. später wirksam wird. Auf diese Weise läßt sich die Fahrzeuglenkung zwischen Leicht- und Schwergängigkeit verändern.

Gemäß einer besonders bevorzugten Ausführungsform können die Schieberbuchse und/oder die Schieberteile, welche quer zum normalen Steuer- bzw. Drehhub verschiebbar sind, als tiefgezogene Teile ausgebildet sein, um eine besonders einfache Herstellung zu ermöglichen.

## Patentansprüche

1. Servoventil (1) nach Art eines Drehschieberventiles mit Drehschieberteil (3) und Drehschieberbuchse (2), mit einem Druckanschluß, einem Niederdruckanschluß sowie zwei Motoranschlüssen, welche mit dem Druckanschluß über erste Spalte zwischen Steuerkanten (5',6') am Drehschieberteil (3) und zugeordneten Steuerkanten (5,6) an der Drehschieberbuchse (2) und mit dem Niederdruckanschluß über zweite Spalte zwischen weiteren Steuerkanten (4',7') am Drehschieberteil (3) und zugeordneten weiteren Steuerkanten (4,7) an der Drehschieberbuchse (2) verbindbar sind, wobei bei Drehhüben des Drehschieberteiles (3) relativ zur Drehschieberbuchse (2) jeweils die dem einen Motoranschluß zugeordneten Spalte entgegengesetzt zu den dem anderen Motoranschluß zugeordneten Spalten und der erste Spalt bzw. die ersten Spalte jedes Motoranschlusses entgegengesetzt zu dem zweiten Spalt oder den zweiten Spalten dieses Motoranschlusses verändert werden, und
wobei
- entweder die Steuerkanten (4, 4', 5, 6, 5', 6', 7, 7') des Drehschieberteils (3) oder der Drehschieberbuchse (2) an einem axial verschiebbaren Schieberteil (3'),
- oder die Steuerkanten (4, 4', 5, 6, 5', 6', 7, 7') des Drehschieberteils (3) und der Drehschieberbuchse (2) jeweils an einem axial verschiebbaren Schieberteil (3'),
angeordnet sind,
**dadurch gekennzeichnet,**
**daß** die Querschnitte aller Spalte durch axiale Verschiebung des Schieberteiles (3') bzw. der Schieberteile gleichgerichtet veränderbar sind.

2. Servoventil nach Anspruch 1,
**dadurch gekennzeichnet,**
**daß** die Steuerkanten (4,4',5 5',6,6' 7,7') des Drehschieberteiles (3) und/oder der Drehschieberbuchse (2) schräg zur Richtung der Drehhübe ausgerichtet sind.

3. Servoventil nach Anspruch 1 oder 2,
**dadurch gekennzeichnet,**
**daß** die Drehschieberbuchse (3) und/oder die Schieberteile (3') als tiefgezogene Teile ausgebildet sind.

## Claims

1. Servo valve (1) in the manner of a rotary disc valve with a rotary disc component (3) and a rotary disc bushing (2), with a pressurised connection, a low pressure connection and two motorised connections which can be connected with the pressurised connection by means of first gaps between control edges (5', 6') on the rotary disc component (3) and assigned control edges (5, 6) on the rotary disc bushing (2) and with the low pressure connection by means of second gaps between further control edges (4', 7') on the rotary disc component (3) and further assigned control edges (4, 7) on the rotary disc bushing (2), wherein upon rotation strokes of the rotary disc component (3) relative to the rotary disc bushing (2) the gaps assigned to one motorised connection are changed inversely to the gaps assigned to the other motorised connection and the first gap or gaps of each motorised connection are changed inversely to the second gap or gaps of this motorised connection, wherein
- either the control edges (4, 4', 5, 6, 5', 6', 7, 7') of the rotary disc component (3) or the rotary disc bushing (2)
- or the control edges (4, 4', 5, 6, 5', 6', 7, 7') of the rotary disc component (3) and the rotary disc bushing (2)
are respectively arranged on an axially displaceable slide component (3').

2. Servo valve according to claim 1
**characterised in that**
the control edges (4, 4', 5, 5', 6, 6', 7, 7') of the rotary disc component (3) and/or the rotary disc bushing (3) are oriented inclined to the direction of the rotation strokes.

3. Servo valve according to claim 1 or 2
**characterised in that**
the rotary disc bushing (3) and/or the disc parts (3') are formed as deep drawn parts.

## Revendications

1. Servovalve (1) sous forme de valve à tiroir rotatif comportant une partie de tiroir rotatif (3) et une douille à tiroir rotatif (2), comportant un raccord de pression, un raccord de basse pression ainsi que deux raccords de moteur qui sont susceptibles d'être reliés au raccord de pression via des premiers intervalles entre des arêtes de commande (5', 6') sur la partie de tiroir rotatif (3) et des arêtes de commande associées (5, 6) sur la douille à tiroir rotatif (2), et au raccord de basse pression via des deuxièmes intervalles entre d'autres arêtes de commande (4', 7') sur la partie de tiroir rotatif (3) et d'autres arêtes de commande associées (4, 7) sur la douille à tiroir rotatif (2), et lors de courses de rotation de la partie de tiroir rotatif (3) par rapport à la douille à tiroir rotatif (2), les intervalles respectifs associés à l'un des raccords de moteur sont modifiés en sens opposé aux intervalles associés à l'autre raccord de moteur et le premier intervalle ou les premiers intervalles de chaque raccord de moteur sont modifiés en sens opposé au deuxième intervalle ou aux deuxièmes intervalles de ce raccord de moteur, et dans lequel
- soit les arêtes de commande (4, 4', 5, 6, 5', 6', 7, 7') de la partie de tiroir rotatif (3) ou de la douille à tiroir rotatif (2) sont agencées sur une partie de tiroir (3') axialement mobile,
- soit les arêtes de commande (4, 4', 5, 6, 5', 6', 7, 7') de la partie de tiroir rotatif (3) et de la douille à tiroir rotatif (2) sont agencées chacune sur une partie de tiroir (3') axialement mobile,
**caractérisée en ce que** les sections de tous les intervalles sont variables dans le même sens par une translation axiale de la partie de tiroir (3') ou des parties de tiroir.

2. Servovalve selon la revendication 1, **caractérisée en ce que** les arêtes de commande (4, 4', 5, 6, 5', 6', 7, 7') de la partie de tiroir rotatif (3) et/ou de la douille à tiroir rotatif (2) sont orientées en oblique par rapport à la direction des courses de rotation.

3. Servovalve selon l'une ou l'autre des revendications 1 et 2, **caractérisée en ce que** la douille à tiroir rotatif (3) et/ou les parties de tiroir (3') sont réalisées sous forme de pièces embouties.
